# FASCICULE DE BREVET EUROPEEN

(11) **EP 1 056 633 B1**
(45) Date de publication et mention de la délivrance du brevet: **03.07.2002**
(21) Numéro de dépôt: 99904924.0
(22) Date de dépôt: 22.02.1999
(51) Int. Cl.: B60T 13/52, B60T 17/00

(54) **SERVOMOTEUR UTILISANT UN FILTRE A DENSITE CONTROLEE**
SERVOMOTOR MIT FILTER KONTROLLIERTER DICHTHEIT
SERVOMOTOR USING A CONTROLLED DENSITY FILTER

(30) Priorité: 27.02.1998 FR 9802378
(43) Date de publication de la demande: 06.12.2000
(73) Titulaire: Bosch Systemes de Freinage, 93700 Drancy (FR)
(72) Inventeur: LEBOISNE, Cédric, F-75011 Paris (FR)
(74) Mandataire: Hurwic, Aleksander Wiktor
(86) Numéro de dépôt international: FR9900391
(87) Numéro de publication internationale: WO9943526

(56) Documents cités:
- DE-A- 3 510 844
- FR-A- 2 706 403
- US-A- 3 972 263

## Description

La présente invention concerne un servomoteur pneumatique d'assistance au freinage du type de ceux qui comprennent : une enveloppe rigide; une cloison mobile délimitant, de façon étanche, une chambre avant et une chambre arrière à l'intérieur de l'enveloppe, la chambre avant étant en fonctionnement reliée à une première source de pression délivrant une première pression; un piston pneumatique se déplaçant avec la cloison mobile et terminé par un moyeu monté coulissant dans une ouverture de l'enveloppe; un clapet à trois voies logé dans le moyeu et susceptible d'adopter sélectivement un état de repos et un état d'actionnement, dans lesquels la chambre arrière est respectivement reliée à la première source de pression et à une seconde source de pression qui délivre une seconde pression supérieure à la première pression; une tige de commande montée coulissante dans le moyeu, suivant une première direction axiale, entre des première et seconde positions extrêmes pour lesquelles le clapet est respectivement dans son état de repos et dans son état d'actionnement, cette tige de commande étant soumise à une force élastique agissant suivant une seconde direction axiale inverse de la première; et un filtre d'épuration annulaire interposé entre la seconde source de pression et la chambre arrière et logé dans le moyeu autour de la tige de commande.

Des dispositifs de ce type sont bien connus dans l'art antérieur, et par exemple décrits à la figure 1 du document de brevet FR - 2 706 403.

Les recherches de ces dernières années, illustrées par exemple par les documents de brevets EP - 0 796 188 et FR - 2 731 668, ont notamment permis de réduire le bruit de fonctionnement et le temps de réponse des servomoteurs.

L'espoir de nouveaux progrès dans ce domaine conduit cependant à remettre une nouvelle fois en question le filtrage de l'air et du bruit à l'entrée des servomoteurs, l'objectif étant toujours de rendre le filtrage d'autant moins sélectif que la réduction du temps de réponse du servomoteur s'avère plus cruciale.

L'invention se situe dans ce contexte, et a pour but de proposer un servomoteur dont le filtre s'adapte de façon automatique à la sollicitation transmise à ce servomoteur.

A cette fin, le servomoteur de l'invention, par ailleurs conforme au préambule ci-dessus, est essentiellement caractérisé en ce que le filtre est constitué d'un matériau compressible, en ce qu'une première face du filtre est maintenue fixe par rapport au moyeu, en ce qu'une seconde face du filtre est cinématiquement liée à la tige de commande pour pouvoir subir un déplacement par rapport au moyeu, et en ce que le filtre présente un volume variant avec le déplacement de la seconde face du filtre, le filtre présentant un volume minimal, pour lequel il est comprimé, lorsque la tige de commande est dans sa première position extrême, et un volume maximal, pour lequel il est détendu, lorsque la tige de commande est dans sa seconde position extrême.

Grâce à ces caractéristiques, le filtre est d'autant moins sélectif que l'amplitude du déplacement de la tige de commande par rapport au moyeu est importante, ce paramètre constituant précisément une mesure appropriée de l'intensité de la sollicitation transmise au servomoteur.

Le servomoteur de l'invention peut comprendre un support annulaire solidaire du moyeu, auquel est fixée la première face du filtre, la seconde face du filtre étant fixée sur un bord extérieur d'une collerette dont un bord intérieur est solidaire de la tige de commande.

Dans un mode de réalisation possible de l'invention, la collerette succède au support annulaire suivant la première direction axiale, et la seconde face du filtre succède à sa première face suivant la première direction axiale.

Dans un autre mode de réalisation possible de l'invention, une partie au moins de la seconde face du filtre est cinématiquement liée à une zone active d'un organe basculant prenant appui à la fois sur le moyeu et sur la tige de commande, un déplacement de première amplitude de la tige de commande par rapport au moyeu produisant un déplacement de seconde amplitude, supérieure à la première, de la zone active par rapport au moyeu.

Enfin, le filtre peut être constitué d'un polymère poreux, dont les première et seconde faces sont collées au support annulaire, à la collerette, ou à l'organe basculant, ou s'appuient de façon élastique contre ces pièces.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue schématique en coupe d'un servomoteur pneumatique d'assistance au freinage conforme à l'invention;
- la Figure 2 est une vue en coupe d'une partie d'un servomoteur conforme à un mode de réalisation possible de l'invention;
- la Figure 3 est une vue en coupe d'une partie du servomoteur représenté à la Figure 1;
- la Figure 4 est une vue en coupe d'une partie d'un servomoteur conforme à un autre mode de réalisation possible de l'invention;
- la Figure 5 est une vue de face partielle prise suivant l'incidence indiquée par les flèches 5-5 de la Figure 4, à travers le support annulaire supposé transparent;
- la Figure 6 est une vue en coupe d'une partie d'un servomoteur conforme à un autre mode de réalisation possible de l'invention; et
- la Figure 7 est une vue en perspective de l'organe basculant utilisé dans le mode de réalisation de la Figure 6.

Dans la mesure où l'invention ne concerne qu'un perfectionnement apporté aux servomoteurs pneumatiques, et où la constitution générale et le fonctionnement de ces derniers sont bien connus de l'homme de l'art, le principe de ces dispositifs ne sera rapidement rappelé ici que pour permettre une compréhension totale du perfectionnement que représente l'invention.

Schématiquement, un servomoteur pneumatique d'assistance au freinage comprend essentiellement une enveloppe rigide 1, une cloison mobile 2; un piston pneumatique 5; un clapet à trois voies 7; une tige de commande 8; et un filtre d'épuration 9.

La cloison mobile 2 délimite de façon étanche, à l'intérieur de l'enveloppe 1, une chambre avant 3 et une chambre arrière 4, la chambre avant 3 étant en fonctionnement reliée à une première source de pression D qui délivre une pression Pd relativement basse, et la chambre arrière 4 étant sélectivement reliée soit à la première source de pression D, soit à une seconde source de pression A, par exemple l'atmosphère, qui délivre une pression Pa relativement haute, c'est-à-dire supérieure à la première pression Pd.

Le piston pneumatique 5 se déplace avec la cloison mobile 2 et se termine vers l'arrière par un moyeu 6 qui est monté coulissant dans une ouverture la de l'enveloppe 1.

Le clapet à trois voies 7, qui est logé dans le moyeu 6, est susceptible d'adopter sélectivement un état de repos dans lequel la chambre arrière 4 est reliée à la première source de pression D, et un état d'actionnement, dans lequel la chambre arrière 4 est reliée à la seconde source de pression A.

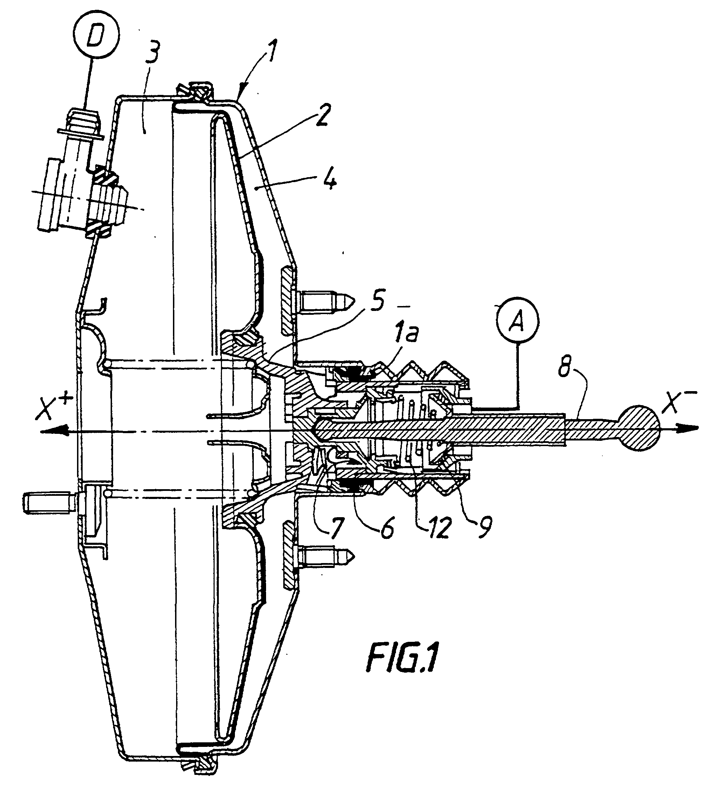

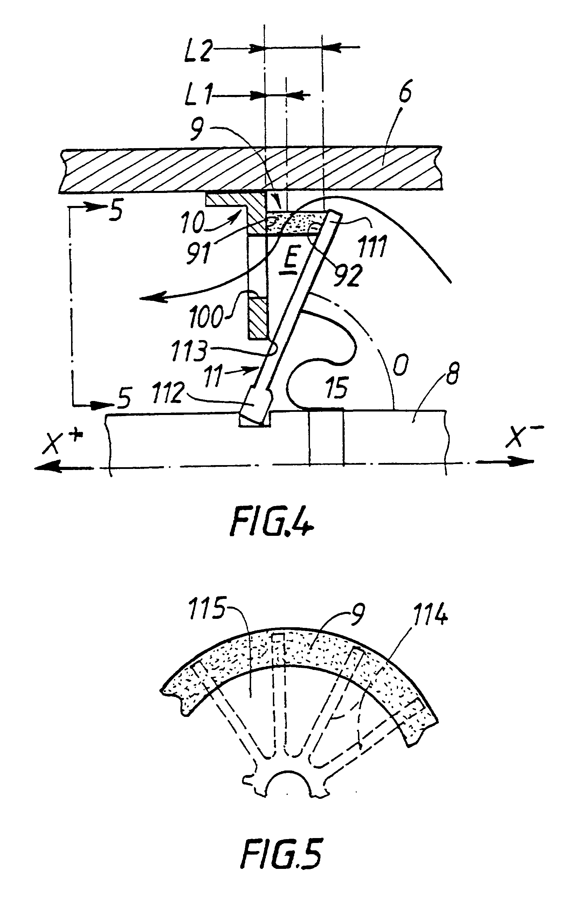

La tige de commande 8 est montée coulissante dans le moyeu 6 de manière à pouvoir être déplacée par rapport à lui, suivant une première direction axiale X⁺, depuis une première position extrême représentée sur les figures 1 à 3, pour laquelle le clapet 7 est dans son état de repos, jusque dans une seconde position extrême illustrée à la figure 4, décalée par rapport à la première position extrême suivant la direction X⁺, et pour laquelle le clapet 7 est dans son état d'actionnement

Un ressort 12 est prévu pour solliciter en permanence la tige de commande 8 suivant une seconde direction axiale X- inverse de la première X⁺, c'est-à-dire pour la repousser vers sa première position extrême.

Le filtre 9, de forme annulaire, est interposé entre la seconde source de pression A et la chambre arrière 4, et logé dans le moyeu 6 autour de la tige de commande 8.

Selon l'invention, le filtre 9 est constitué d'un matériau compressible et présente une première face 91 maintenue fixe par rapport au moyeu 6 et une seconde face 92 cinématiquement liée à la tige de commande 8 pour pouvoir subir un déplacement par rapport au moyeu 6, le filtre 9 présentant ainsi un volume qui varie avec le déplacement de sa seconde face 92.

Plus précisément, le filtre 9 présente un volume minimal V1, pour lequel il est comprimé, lorsque la tige de commande 8 est dans sa première position extrême, et un volume maximal V2, pour lequel il est détendu, lorsque la tige de commande 8 est dans sa seconde position extrême.

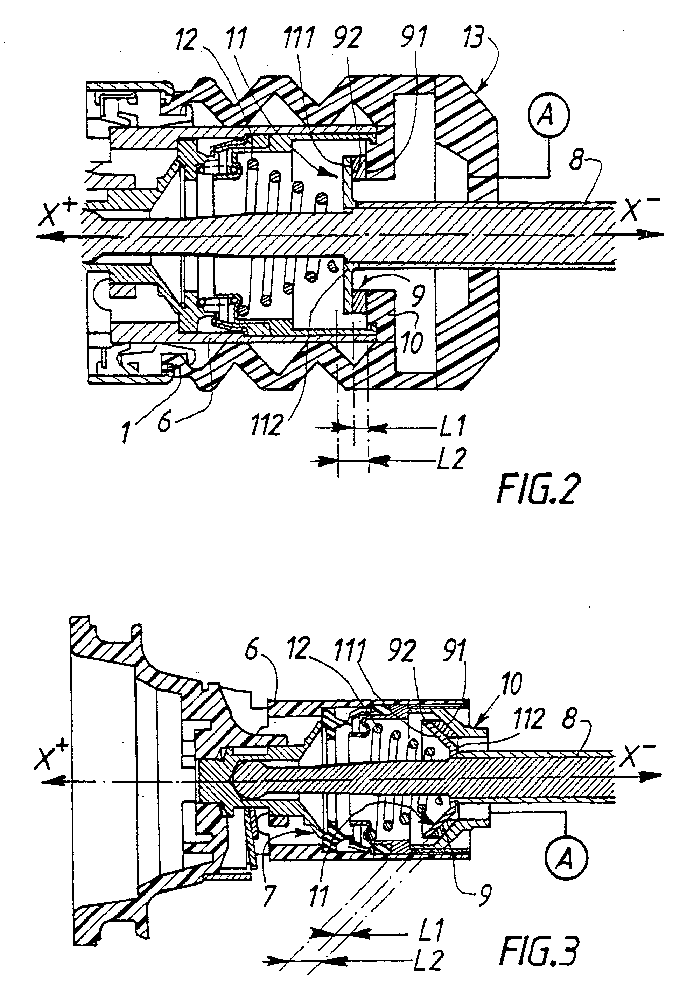

Par exemple, comme le montrent les figures 2 à 4, le servomoteur de l'invention peut comprendre un support annulaire 10 solidaire du moyeu 6, auquel est fixée la première face du filtre 9, la seconde face du filtre 9 étant quant à elle fixée sur un bord extérieur 111 d'une collerette 11 dont un bord intérieur 112 est solidaire de la tige de commande 8.

Dans le mode de réalisation illustré à la figure 2, le support annulaire 10 peut être constitué par une partie annulaire rigide d'un soufflet 13 solidaire du moyeu 6 et agissant comme un filtre primaire peu sélectif.

Mais ce support 10 peut aussi, comme le montre la figure 3, être constitué par une pièce vissée sur l'intérieur du moyeu 6, ou encore, comme le montre la figure 4, par une bague collée ou sertie sur le moyeu.

La collerette peut elle-même être métallique (figure 3) ou constituée par un polymère rigide (figure 2) et peut en outre être plane (figure 2), conique et rigide (figure 3), ou encore flexible, comme le montre la figure 4 qui sera décrite plus en détail ultérieurement.

Dans les modes de réalisation des figures 2 et 3, la collerette 11 succède au support annulaire 10 suivant la première direction axiale X⁺, alors que la figure 4 illustre un agencement inverse, dans lequel la collerette 11 précède le support annulaire 10 suivant la première direction axiale X⁺.

Néanmoins, dans les modes de réalisation illustrés aux figures 2 à 5, les variations de volume du filtre 9 sont toutes obtenues par variations de la longueur du filtre suivant la première direction axiale X⁺, ce filtre présentant, entre ses deux faces 91, 92, une première longueur L1 lorsqu'il est comprimé sous son volume minimal V1, et une seconde longueur L2 lorsqu'il est détendu et qu'il occupe son volume maximal V2.

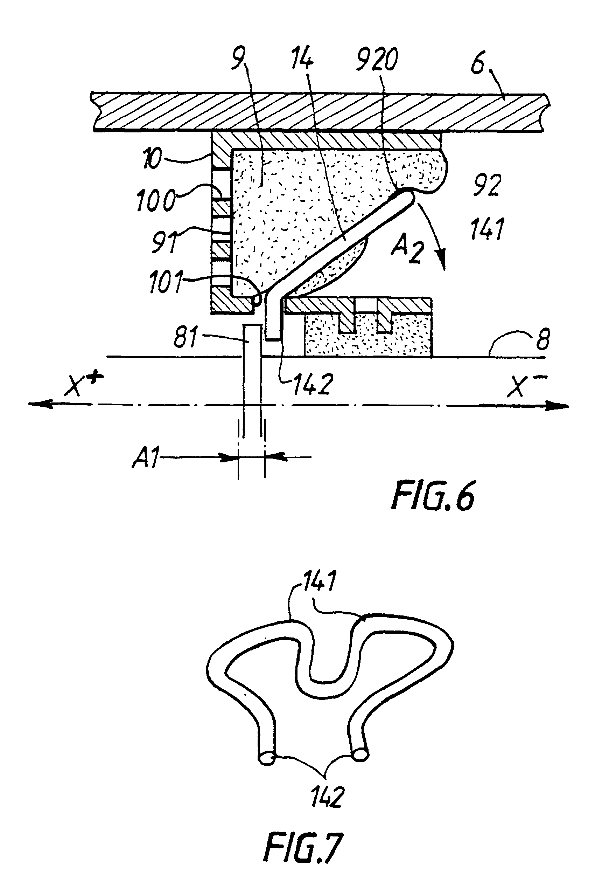

Dans le mode de réalisation des figures 4 et 5, la collerette 11 est conformée en un cône d'angle d'ouverture O variable, élastiquement sollicité suivant la première direction axiale X⁺ pour laquelle cet angle augmente, à la manière d'un parapluie automatique.

Par exemple, cette collerette est formée d'une armature en étoile 114 réalisée en un polymère flexible, recouverte d'un film étanche à l'air 115, et sollicitée par un ressort 15.

Le support annulaire 10 et la collerette 11 sont en appui mutuel en une pluralité de points de contact 113 de la collerette, intermédiaires entre les bords intérieur 112 et extérieur 111 de celle-ci, le support annulaire 10 et la collerette 11 délimitant entre eux un espace E non étanche à l'air, s'ouvrant sur des passages d'air 100 ménagés dans le support annulaire 10.

De cette façon, un mouvement de la tige de commande 8 suivant la première direction axiale X⁺ déplace le bord extérieur 111 de la collerette 11 suivant la direction inverse X-, pour laquelle l'angle O du cône diminue.

Il suffit alors de prévoir que les point de contact 113 de la collerette 11 soient plus proches du bord intérieur 112 que du bord extérieur 111 de cette collerette 11, pour obtenir qu'un mouvement de première amplitude de la tige de commande 8 par rapport au moyeu 6 provoque un allongement du filtre 9 de seconde amplitude, supérieure à la première amplitude.

Les figures 6 et 7 illustrent un autre mode de réalisation de l'invention, qui permet également de transmettre à la seconde face 92 du filtre 9 un déplacement supérieur à celui qu'effectue la tige de commande 8 par rapport au moyeu 6.

Pour cela, une partie 920 au moins de la seconde face 92 du filtre 9 est, comme dans le cas précédant, cinématiquement liée à une zone active 141 d'un organe basculant 14 prenant appui à la fois sur le moyeu 6 et sur la tige de commande 8.

Autrement dit, certains des points de l'organe basculant sont fixes par rapport au moyeu, tandis que d'autres points de l'organe basculant sont fixes par rapport à la tige de commande.

L'organe basculant 14 prend en l'occurrence la forme d'une agrafe métallique dont la partie supérieure 141 (pour la disposition illustrée aux figures 6 et 7) vient en contact sur la seconde face 92 du filtre 9, et dont la partie inférieure 142 est insérée dans un orifice 101 du support annulaire 10, lequel est percé de passages d'air axiaux 100.

Au delà de l'orifice 101, la partie inférieure 142 de l'organe basculant 14 reçoit, de la part d'un relief annulaire 81 solidaire de la tige de commande 8, la force élastique qu'exerce le ressort 12 sur la tige de commande, suivant la direction axiale inverse X-.

Dans ces conditions, l'organe basculant 14 repousse la seconde face 92 du filtre 9 suivant une direction à la fois axiale et radiale, de façon telle qu'un déplacement de première amplitude A1 de la tige de commande 8 par rapport au moyeu 6 produit, par rapport à ce moyeu, un déplacement de seconde amplitude A2, supérieure à la première A1, de la partie supérieure 141 qui constitue la zone active de l'organe basculant.

Dnas le mode de ralisation des figures 6 et 7, le filtre est très avantageusement constitué par un polymère poreux doté de propriétés élastiques, de sorte que la seconde face 92 du filtre 9 s'appuie en permanence contre la zone active 141 sans qu'il soit nécessaire de prévoir un collage de cette face 92 sur l'organe basculant 14.

Dans les autres modes de réalisation présentés, il est en revanche possible de prévoir que le filtre soit constitué d'un polymère poreux, élastique ou non, dont les faces 91, 92 sont fixées par collage.

## Revendications

1. Servomoteur pneumatique d'assistance au freinage comprenant : une enveloppe rigide (1); une cloison mobile (2) délimitant, de façon étanche, une chambre avant (3) et une chambre arrière (4) à l'intérieur de l'enveloppe (1), la chambre avant (3) étant en fonctionnement reliée à une première source de pression (D) délivrant une première pression (Pd); un piston pneumatique (5) se déplaçant avec la cloison mobile (2) et terminé par un moyeu (6) monté coulissant dans une ouverture (1a) de l'enveloppe (1); un clapet à trois voies (7) logé dans le moyeu (6) et susceptible d'adopter sélectivement un état de repos et un état d'actionnement, dans lesquels la chambre arrière (4) est respectivement reliée à la première source de pression (D) et à une seconde source de pression (A) qui délivre une seconde pression (Pa) supérieure à la première pression (Pd); une tige de commande (8) montée coulissante dans le moyeu (6), suivant une première direction axiale (X⁺), entre des première et seconde positions extrêmes pour lesquelles le clapet (7) est respectivement dans son état de repos et dans son état d'actionnement, cette tige de commande étant soumise à une force élastique agissant suivant une seconde direction axiale (X-) inverse de la première (X⁺); et un filtre d'épuration (9) annulaire interposé entre la seconde source de pression (A) et la chambre arrière (4) et logé dans le moyeu (6) autour de la tige de commande (8), **caractérisé en ce que** le filtre (9) est constitué d'un matériau compressible, **en ce qu'**une première face (91) du filtre (9) est maintenue fixe par rapport au moyeu (6), **en ce qu'**une seconde face (92) du filtre (9) est cinématiquement liée à la tige de commande (8) pour pouvoir subir un déplacement par rapport au moyeu (6), et **en ce que** le filtre (9) présente un volume variant avec le déplacement de la seconde face (92) du filtre, le filtre (9) présentant un volume minimal (V1), pour lequel il est comprimé, lorsque la tige de commande (8) est dans sa première position extrême, et un volume maximal (V2), pour lequel il est détendu, lorsque la tige de commande (8) est dans sa seconde position extrême.

2. Servomoteur pneumatique suivant la revendication 1, **caractérisé en ce qu'**il comprend un support annulaire (10) solidaire du moyeu (6), et auquel est fixée la première face (91) du filtre (9).

3. Servomoteur pneumatique suivant la revendication 1 ou 2, **caractérisé en ce que** la seconde face (92) du filtre (9) est fixée sur un bord extérieur (111) d'une collerette (11) dont un bord intérieur (112) est solidaire de la tige de commande (8).

4. Servomoteur pneumatique suivant la revendication 3, **caractérisé en ce que** la collerette (11) succède au support annulaire (10) suivant la première direction axiale (X⁺), et **en ce que** la seconde face (92) du filtre (9) succède à sa première face (91) suivant la première direction axiale (X⁺).

5. Servomoteur pneumatique suivant la revendication 1, **caractérisé en ce qu'**une partie au moins (920) de la seconde face (92) du filtre (9) est cinématiquement liée à une zone active (111, 141) d'un organe basculant (11, 13) prenant appui à la fois sur le moyeu (6) et sur la tige de commande (8), un déplacement de première amplitude (A1) de la tige de commande (8) par rapport au moyeu (6) produisant un déplacement de secondé amplitude (A2), supérieure à la première (A1), de la zone active (111, 141) par rapport au moyeu (6).

6. Servomoteur pneumatique suivant l'une quelconque des revendications précédentes, **caractérisé en ce que** le filtre (9) est constitué d'un polymère poreux.

## Patentansprüche

1. Pneumatischer Bremsunterstützungs-Servomotor mit: einem starren Gehäuse (1); einer beweglichen Wand (2), die in dichter Weise eine vordere Kammer (3) und eine hintere Kammer (4) im Inneren des Gehäuses (1) abgrenzt, wobei die vordere Kammer (3) im Betrieb mit einer ersten Druckquelle (D) verbunden ist, die einen ersten Druck (Pd) liefert; einem Pneu matikkolben (5), der sich zusammen mit der beweglichen Wand (2) verstellt und in einer Nabe (6) endet, die verschiebbar in einer Öffnung (1) des Gehäuses (1) angebracht ist; einem Dreiwegeventil (7), das in der Nabe (6) angeordnet ist und selektiv einen Ruhezustand oder einen Betätigungszustand einnehmen kann, in denen die hintere Kammer (4) mit der ersten Druckquelle (D) bzw. einer zweiten Druckquelle (A) verbunden ist, die einen zweiten Druck (Pa) liefert, der größer als der erste Druck (Pd) ist, einer Steuerstange (8), die in der Nabe (6) entlang einer ersten axialen Richtung (X⁺) zwischen einer ersten und einer zweiten Endstellung verschiebbar ist, bei denen sich das Ventil (7) in seinem Ruhezustand bzw. seinem Betätigungszustand befindet, wobei die Steuerstange einer elastischen Kraft ausgesetzt ist, die entlang einer zweiten axialen Richtung (X-) wirkt, die entgegengesetzt zur ersten Richtung (X⁺) ist; und einem ringförmigen Reinigungsfilter (9), der zwischen der ersten Druckquelle (A) und der hinteren Kammer (4) vorgesehen und in der Nabe (6) um die Steuerstange (8) herum angeordnet ist, **dadurch gekennzeichnet, daß** der Filter (9) aus einem kompressiblen Material besteht, daß eine erste Seite (91) des Filters (9) fest bezüglich der Nabe (6) gehalten ist, daß eine zweite Seite (92) des Filters (9) kinematisch mit der Steuerstange (8) verbunden ist, um eine Verstellung bezüglich der Nabe (6) erfahren zu können, und daß der Filter (9) ein Volumen aufweist, das sich mit der Verstellung der zweiten Seite (92) des Filters ändert, wobei der Filter (9) ein minimales Volumen (V1) aufweist, bei dem er komprimiert ist, wenn sich die Steuerstange (8) in ihrer ersten Endstellung befindet, und ein maximales Volumen (V2), bei dem er gestreckt ist, wenn sich die Steuerstange (8) in ihrer zweiten Endstellung befindet.

2. Pneumatischer Servomotor nach Anspruch 1, **dadurch gekennzeichnet, daß** er einen fest mit der Nabe (6) verbundenen, ringförmigen Träger (10) aufweist, an welchem die erste Seite (91) des Filters (9) befestigt ist.

3. Pneumatischer Servomotor nach Anspruch 1 oder Anspruch 2, **dadurch gekennzeichnet, daß** die zweite Seite (92) des Filters (9) an einem Außenrand (111) einer Scheibe (11) befestigt ist, deren Innenrand (112) fest mit der Steuerstange (8) verbunden ist.

4. Pneumatischer Servomotor nach Anspruch 3, **dadurch gekennzeichnet, daß** die Scheibe (11) entlang der ersten axialen Richtung (X⁺) auf den ringförmigen Träger (10) folgt und daß die zweite Seite (92) des Filters (9) entlang der ersten axialen Richtung (X⁺) auf die erste Seite (91) folgt.

5. Pneumatischer Servomotor nach Anspruch 1, **dadurch gekennzeichnet, daß** wenigstens ein Teil (920) der zweiten Seite (92) des Filters (9) kinematisch mit einer aktiven Zone (111, 141) eines Kipporgans (11, 13) verbunden ist, das gleichzeitig an der Nabe (6) und an der Steuerstange (8) anliegt, wobei eine Verstellung der Steuerstange (8) bezüglich der Nabe (6) mit einer ersten Amplitude (A1) eine Verstellung der aktiven Zone (111, 141) bezüglich der Nabe (6) mit einer zweiten Amplitude (A2) hervorruft, die größer als die erste Amplitude (A1) ist.

6. Pneumatischer Servomotor nach einem der vorhergehenden Ansprüche, **dadurch gekennzeichnet, daß** der Filter (9) aus einem porösen Polymer besteht.

## Claims

1. Pneumatic brake booster comprising: a rigid casing (1); a moving partition (2) delimiting, in leaktight fashion, a front chamber (3) and a rear chamber (4) inside the casing (1), the front chamber (3) in operation being connected to a first pressure source (D) delivering a first pressure (Pd); a pneumatic piston (5) moving with the moving partition (2) and ending in a hub (6) mounted to slide in an opening (1a) in the casing (1); a three-way valve (7) housed in the hub (6) and capable selectively of adopting a state of rest and an actuating state, in which states the rear chamber (4) is respectively connected to the first pressure source (D) and to a second pressure source (A) which delivers a second pressure (Pa) higher than the first pressure (Pd); an operating rod (8) mounted to slide in the hub (6) in a first axial direction (X+) between first and second extreme positions for which the valve (7) is respectively in its state of rest and in its actuating state, this operating rod being subjected to an elastic force acting in a second axial direction (X-) the opposite of the first (X+); and an annular purification filter (9) inserted between the second pressure source (A) and the rear chamber (4) and housed in the hub (6) around the operating rod (8), **characterized in that** the filter (9) is made of a compressible material, **in that** a first face (91) of the filter (9) is kept stationary with respect to the hub (6), **in that** a second face (92) of the filter (9) is kinematically connected to the operating rod (8) so that it can be displaced with respect to the hub (6), and **in that** the filter (9) has a volume that varies with the displacement of the second face (92) of the filter, the filter (9) having a minimum volume (V1) for which it is compressed, when the operating rod (8) is in its first extreme position, and a maximum volume (V2), for which it is relaxed, when the operating rod (8) is in its second extreme position.

2. Pneumatic booster according to Claim 1, **characterized in that** it comprises an annular support (10) secured to the hub (6) and to which the first face (91) of the filter (9) is attached.

3. Pneumatic booster according to Claim 1 or 2, **characterized in that** the second face (92) of the filter (9) is attached to an outer edge (111) of a flange (11), an inner edge (112) of which is secured to the operating rod (8).

4. Pneumatic booster according to Claim 3, **characterized in that** the flange (11) follows on from the annular support (10) in the first axial direction (X+), and **in that** the second face (92) of the filter (9) follows on from its first face (91) in the first axial direction (X+).

5. Pneumatic booster according to Claim 1, **characterized in that** at least part (920) of the second face (92) of the filter (9) is kinematically linked with an active region (111, 141) of a tilting member (11, 13) resting both on the hub (6) and on the operating rod (8), a displacement of a first amplitude (A1) of the operating rod (8) with respect to the hub (6) producing a displacement of a second amplitude (A2), greater than the first (A1), of the active region (111, 141) with respect to the hub (6).

6. Pneumatic booster according to any one of the preceding claims, **characterized in that** the filter (9) is made of a porous polymer.
